# EUROPÄISCHE PATENTSCHRIFT

(11) **EP 1 227 647 B1**
(45) Veröffentlichungstag und Bekanntmachung des Hinweises auf die Patenterteilung: **22.06.2005**
(21) Anmeldenummer: 02001283.7
(22) Anmeldetag: 17.01.2002
(51) Int. Cl.: H04M 11/00, G06F 17/00, G06F 13/00

(54) **Maschinendiagnose/-service mittels "Augmented Reality" und Echtzeitübertragung von Multimedianachrichten**
Diagnosis and maintenance of machines via augmented reality device and transmission of multi media messages in realtime
Diagnostique et maintenance de machines utilisant realité amplifiée et une transmission en temps réel de messages multimédia

(30) Priorität: 25.01.2001 DE 10103333; 20.06.2001 DE 10129566
(43) Veröffentlichungstag der Anmeldung: 31.07.2002
(73) Patentinhaber: SIEMENS AKTIENGESELLSCHAFT, 80333 München (DE)
(72) Erfinder: Kiesel, Martin, 91099 Poxdorf (DE); Polz, Andreas, 91056 Erlangen (DE); Wagner, Peter, 91217 Hersbruck (DE)

(56) Entgegenhaltungen:
- US-A- 6 033 226
- US-A- 6 144 848
- CIULLI N ET AL: "A cooperative environment based on augmented reality: from telepresence to performance issues" COMPUTER NETWORKS AND ISDN SYSTEMS, NORTH HOLLAND PUBLISHING. AMSTERDAM, NL, Bd. 30, Nr. 16-18, 30. September 1998 (1998-09-30), Seiten 1447-1455, XP004138675 ISSN: 0169-7552
- PULLI, PYSSYSALO, METSÄVAINIO, KOMULAINEN: "CyPhone Mobile Telepresence and augmented reality for 3rd generation cellular phone" ORGANISED BY EUROMICRO OFFICE ... ED. BY TAPIO SEP / EUROMICRO SUMMER SCHOOL ON MOBILE COMPUTING '98 , 1998, Seiten 35-46, XP001069756
- TURUNEN, RÖNING, AHOLA, PYSSYSALO: "A wearable computer for mobile augmented reality based controlling of an intelligent robot" PROCEEDINGS OF SPIE, 2000, XP001069795

## Beschreibung

Die vorliegende Erfindung betrifft einen Steuerungsvorrichtung und ein Verfahren zur Steuerung oder Regelung sowie zur Überwachung einer automatisierten Maschine mit einer Verarbeitungseinrichtung zum Verarbeiten und unmittelbaren Kommunizieren von Daten betreffend die automatisierte Maschine von/mit einer davon entfernt angeordneten Datenverarbeitungsvorrichtung, wobei durch die Verarbeitungseinrichtung die die automatisierte Maschine betreffenden Daten in Form von Multimedia-Nachrichten verarbeitbar und an die entfernte Datenverarbeitungsvorrichtung übertragbar sind, so dass Daten für die Steuerung oder Regelung der automatisierten Maschine in der entfernten Datenverarbeitungsvorrichtung erstellbar und Überwachungs- sowie Diagnosedaten bezüglich der automatisierten Maschine in der entfernten Datenverarbeitungsvorrichtung auswertbar sind.

Automatisierte Maschinen werden zum gegenwärtigen Zeitpunkt üblicherweise vor Ort durch einen Bediener betreiben oder durch Servicepersonal gewartet und überwacht. Ebenso ist es geläufig, dass der Bediener vor Ort mit einem Servicecenter (Hotline) über das Telefon kommuniziert, um die automatisierte Maschine fachgerecht zu bedienen. Die Kommunikation zwischen dem Bediener und einem Service-Mann kann üblicherweise nicht nur mittels einer sogenannten Telefon-Hotline, sondern auch über Telefax oder E-Mail erfolgen.

Darüber hinaus sind Techniken bekannt, mit denen Steuerungsdaten auf einen entfernt angeordneten Computer übertragbar sind, so dass Steuerungsparameter durch einen sogenannten Tele-Service betrachtet und geändert werden können.

Nachteilig an den bekannten Systemen ist, dass der Bediener in der Regel über die Automatisierungstechnik nicht derart geschult ist, dass er die Anweisungen des Servicepersonals ohne weiteres umsetzen kann. Umgekehrt ist es aber auch für das Servicepersonal schwierig oder unmöglich, eine Diagnose über die automatisierte Maschine zu erstellen, wenn Daten oder Parameter nur über den ungeschulten Bediener zum Servicepersonal übermittelt werden können.

In diesem Zusammenhang ist aus der Patentschrift US 6 033 226 ein Multimedia-System bekannt, mit dem es möglich ist, eine Person für die Bedienung einer Maschine zu trainieren. Das Trainingssystem ist hierbei an die Maschine angeschlossen, und mit einer entfernt angeordneten Station kann das System in Echtzeit überwacht werden. Eine Datenverbindung zwischen dem Trainingssystem und der entfernt gelegenen Station erfolgt über ein Intranet oder über das Internet. Dabei erfolgt lediglich eine Überwachung des Computerspeichers des Trainingssystems, der mit der entfernten Station verlinkt ist.

Darüber hinaus beschreibt die Patentschrift US 6 144 848 eine Multimedia-Kommunikation zwischen einem Hand-Held und einem Server. Die dortige Lehre beschränkt sich auf die Fernsteuerung eines Computers.

Die Aufsätze "Computer Networks and ISDN-Systems", North Holland Publishing, Amsterdam, NI(30-09-1998), 30(16 - 18), 1447 - 1455 und XP 1069756 "CyPhone - Mobile Telepresence and Augmented Reality for 3^{rd} Generartion Cellular Phone", Euromicro Summer School On Mobile Computing '98 (1998), Seiten 35-46, Organised By Euromicro ... Ed., by Tapio Sep betreffen die Fernsteuerung von Robotern mit Hilfe von Augmented-Reality-Systemen. Dabei werden Multimedia-Daten beispielsweise über das Internet ausgetauscht.

Eine gattungsgemäße Steuervorrichtung ist in der Druckschrift XP-001069795 Proceedings of Spie, Vol.4197 (20009, "A wearable computer for mobile-augmented reality based controlling of an intelligent robot", Seiten 45-57 beschrieben. Diese Steuervorrichtung für einen intelligenten Roboter besitzt eine Breitbandverbindung zu einem tragbaren Computer, der eine mobile Augmented-Reality-Visualisierung ermöglicht. Dabei versteht man unter dem Begriff "Augmented Reality" eine sogenannte "erweiterte Realität" für eine Form der Mensch-Technik-Interaktion, bei der dem Anwender beispielsweise über eine Datenbrille Informationen in sein Sichtfeld eingeblendet werden. Die Einblendung geschieht jedoch kontextabhängig, d.h. passend und abgeleitet vom Betrachterobjekt, z.B. einer Anlage. Es verschmilzt dabei die reale und die virtuelle Welt.

Die Aufgabe der vorliegenden Erfindung besteht somit darin, den Datenaustausch zwischen einer automatisierten Maschine und deren Bediener zu verbessern.

Erfindungsgemäß wird diese Aufgabe gelöst durch eine Steuerungsvorrichtung zur Steuerung oder Regelung sowie zur Überwachung einer automatisierten Maschine mit einer Verarbeitungseinrichtung zum Verarbeiten und unmittelbaren Kommunizieren von Daten betreffend die automatisierte Maschine von/mit einer davon entfernt angeordneten Datenverarbeitungsvorrichtung, wobei durch die Verarbeitungseinrichtung die die automatisierte Maschine betreffenden Daten in Form von Multimedia-Nachrichten verarbeitbar und an die entfernte Datenverarbeitungsvorrichtung übertragbar sind, so dass Daten für die Steuerung oder Regelung der automatisierten Maschine in der entfernten Datenverarbeitungsvorrichtung erstellbar und Überwachungs- sowie Diagnosedaten bezüglich der automatisierten Maschine in der entfernten Datenverarbeitungsvorrichtung auswertbar sind, wobei die Multimedia-Nachrichten dem UMTS-Standard entsprechen und eine Augmented-Reality-Einrichtung für einen Bediener der Maschine über eine Telekommunikationseinrichtung mit der Datenverarbeitungsvorrichtung verbunden ist.

Ferner wird die oben genannte Aufgabe gelöst durch ein Verfahren zur Steuerung oder Regelung sowie zur Überwachung einer automatisierten Maschine durch Bereitstellen einer Steuerungsvorrichtung und einer davon entfernt angeordneten Datenverarbeitungsvorrichtung, die miteinander durch eine Telekommunikationseinrichtung unmittelbar verbunden sind, und Übertragen von Steuerungs- und Überwachungsdaten betreffend die automatisierte Maschine in Form von Multimedia-Nachrichten über die Telekommunikationseinrichtung zwischen der Steuerungsvorrichtung und der entfernt angeordneten Datenverarbeitungsvorrichtung in Echtzeit, so dass Daten für die Steuerung oder Regelung der automatisierten Maschine in der entfernten Datenverarbeitungsvorrichtung erstellbar und Überwachungssowie Diagnosedaten bezüglich der automatisierten Maschine in der entfernten Datenverarbeitungsvorrichtung auswertbar sind, wobei die Multimedia-Nachrichten dem UMTS-Standard entsprechen und die Steuerungs- und,Überwachungsdaten mit der Telekommunikationseinrichtung an eine Augmented-Reality-Einrichtung übertragen und dort für einen Bediener der Maschine visualisiert werden.

Vorteilhafte Weiterentwicklungen der erfindungsgemäßen Steuervorrichtung und des erfindungsgemäßen Verfahrens sind in den Unteransprüchen definiert.

Die vorliegende Erfindung gestattet somit, dass einem Bediener einer automatisierten Maschine bzw. einem Service-Mann Daten und Informationen von der Gegenseite multimedial übermittelt werden können. So kann der Service-Mann beispielsweise die automatisierte Maschine über ein Fernsehbild online betrachten und ist nicht auf die Beschreibungen eines Bedieners angewiesen.

Die vorliegende Erfindung wird nun anhand der beigefügten Zeichnungen näher erläutert, in denen zeigen:
Fig. 1 eine einfache Kommunikation zwischen einem Bediener einer Maschine und einem Remote-Service-Mann nach dem Stand der Technik;
Fig. 2 eine Tele-Service-Einrichtung nach dem Stand der Technik;
Fig. 3 eine UMTS-Service-Verbindung gemäß einer ersten Ausführungsform der vorliegenden Erfindung;
Fig. 4 eine Service-Verbindung mit einem Augmented-Reality-Gerät gemäß einer zweiten Ausführungsform der vorliegenden Erfindung;
Fig. 5 ein Service-System mit mehreren Servicepersonen gemäß einer dritten Ausführungsform der vorliegenden Erfindung; und
Fig. 6 ein Service-System mit einem UMTS-Netz mit mehreren Service-Einrichtungen gemäß einer vierten Ausführungsform der vorliegenden Erfindung.

Die nachfolgenden Ausführungsformen stellen bevorzugte Anwendungen der vorliegenden Erfindung dar.

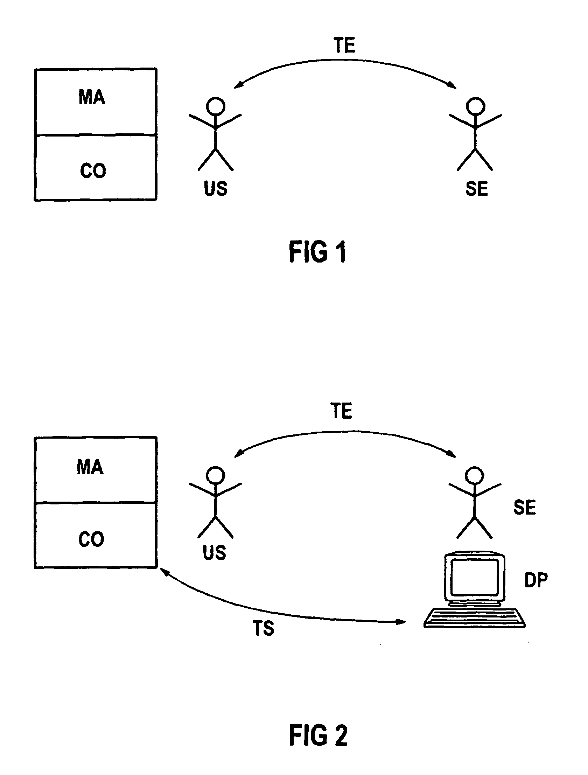

Der Aufbau der erfindungsgemäßen Vorrichtung bzw. des erfindungsgemäßen Systems sei zunächst anhand des Stands der Technik gemäß den Figuren 1 und 2 erläutert. Entsprechend Fig. 1 besitzt eine Maschine MA eine Steuerungseinheit CO. Ein Bediener US bedient die Maschine MA bzw. die Steuerung CO. Der Bediener US steht mit einem sogenannten Remote-Service-Mann SE über Telefon oder Fax TE in Verbindung. Der Service-Mann kann hierzu beispielsweise eine Hotline besetzen.

Nach Fig. 2 wird die Telefonverbindung TE zwischen Bediener US und Service-Mann SE durch eine Tele-Service-Verbindung TS ergänzt. Im Rahmen eines derartigen Tele-Service kann der Remote-Service-Mann SE Parameter der Steuerung an einem Bildschirmarbeitsplatz sehen und ändern. Darüber hinaus kann der Service-Mann SE die gegebenenfalls geänderten Steuerungsparameter über die Tele-Service-Verbindung TS an die Steuerung CO bzw. die Maschine MA zurücksenden.

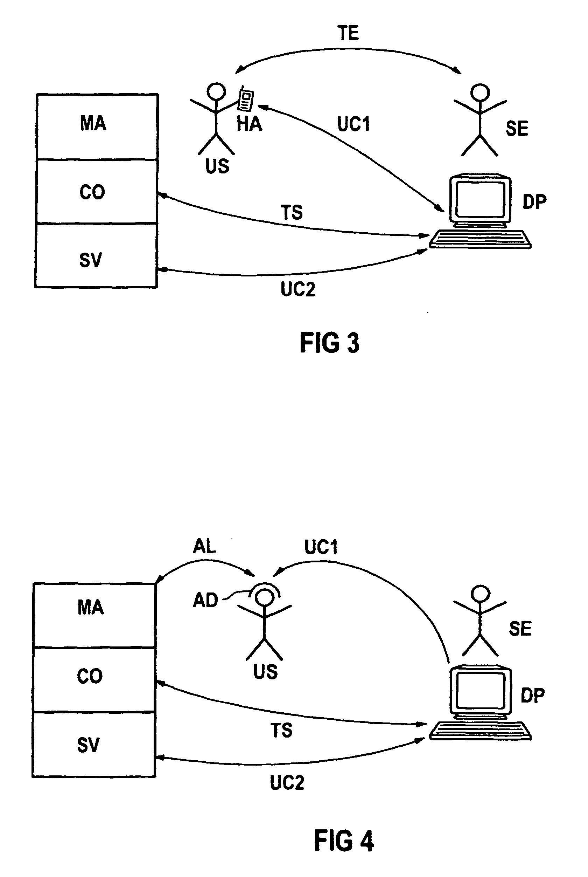

Die geschilderte Datenkommunikation zwischen Bediener US und Service-Mann SE wird nun in einer ersten Ausführungsform gemäß Fig. 3 durch zwei UMTS-Verbindungen UC 1 und UC 2 erfindungsgemäß ergänzt. Durch einen UMTS-Server SV an der Steuerung CO erhält der Service-Mann SE Live-Bilder bzw. bewegte Bilder der Maschine in Echtzeit beispielsweise von einer WebCam über die UMTS-Verbindung UC 2. Dem Bediener US kann der Service-Mann SE dann über die UMTS-Verbindung UC 1 an einem UMTS-Gerät HA Instruktionen zum Bedienen der Maschine MA zukommen lassen. Ein derartiges UMTS-Gerät HA kann aus einem Handy, einem Handheld oder beispielsweise einem Palmtop bestehen. Die Instruktionen können auch bewegte Animationen umfassen. Damit ist der Bediener US in der Lage, gegebenenfalls komplizierte Anweisungen des Service-Manns SE umzusetzen. Ferner erlaubt die UMTS-Verbindung UC 2 eine unmittelbare Betrachtung von Betriebszuständen der Maschine MA durch den Service-Mann SE, ohne auf das Wissen des Bedieners US angewiesen zu sein.

In einer zweiten Ausführungsform der vorliegenden Erfindung gemäß Fig. 4, die eine Weiterentwicklung der ersten Ausführungsform gemäß Fig. 3 darstellt, ist ein Augmented-Reality-Gerät AD für den Bediener US vorgesehen. Das Augmented-Reality-Gerät AD ist über die UMTS-Verbindung UC 1 mit der Datenverarbeitungsanlage DP des Service-Manns SE verbunden. Darüber hinaus ist das Augmented-Reality-Gerät AD über eine Augmented-Reality-Schleife AL mit der Maschine MA bzw. deren Steuerung CO verbunden.

Der Service-Mann SE kann über die UMTS-Verbindung UC 1 direkt in das Augmented-Reality-Gerät AD des Bedieners US eingreifen. Der Bediener US kann über die Augmented-Reality-Schleife mit der Maschine MA kommunizieren, wobei beispielsweise aktuelle bzw. aufgezeichnete Maschinendaten visualisiert und animiert werden. In diese Augmented-Reality-Schleife AL kann sich der Service-Mann SE direkt einklinken. Augmented-Reality-Geräte AD sind beispielsweise Brillen, in die Videosequenzen eingespeist werden können. Die in den Figuren 1 bis 3 gezeichneten Telefon- bzw. Fax-Verbindungen TE zwischen Bediener US und Servicemann SE können natürlich weiterhin bestehen.

Eine dritte Ausführungsform der vorliegenden Erfindung besteht darin, dass mehrere Servicecentren bzw. Service-Männer SE 1, SE 2 vorgesehen sind, die über ihre Datenverarbeitungsanlagen DP 1, DP 2 mit der zu steuernden Maschine MA bzw. dem Bediener US in Verbindung stehen. Zusätzlich zu den in den vorhergehenden Figuren 1 bis 4 dargestellten Verbindungen existieren eine oder mehrere weitere breitbandige oder UMTS-Kommunikationsverbindungen UC 11, UC 12, UC 21, UC 22 zum multimedialen Datenaustausch zwischen dem Bediener US bzw. der Maschine MA und den Service-Männern SE 1, SE 2. Die UMTS-Verbindungen UC 11 und UC 12 haben dabei die gleiche Funktion wie die UMTS-Verbindung UC 1 aus Fig. 4, und ebenso haben die UMTS-Verbindungen UC 21 und UC 22 die gleiche Funktion wie die UMTS-Verbindung UC 2 aus Fig. 4.

In ähnlicher Weise kann zwischen jeder Serviceeinheit SE 1, SE 2 und der Steuerung CO der Maschine MA eine Tele-Service-Verbindung TS 1, TS 2 hergestellt sein. Mit diesem System können beispielsweise neben dem Service-Mann SE 1 für den Steuerungshersteller auch einer oder mehrere weitere Service-Männer SE 2, z. B. vom Maschinenhersteller, mit dem Bediener US der Maschine MA insbesondere auch gleichzeitig kommunizieren. Über die entsprechenden Rückkanäle der UMTS-Verbindungen UC 11, UC 12 und/oder durch eine spezielle Konferenzverbindung CC können Konferenzschaltungen aufgebaut werden.

Wie auch in den vorhergehenden Ausführungsformen können die UMTS-Verbindungen in der dritten Ausführungsform alle oder einzeln durch andere breitbandige Übertragungsverbindungen ersetzt werden, die Multimedianachrichten in Echtzeit übertragen können.

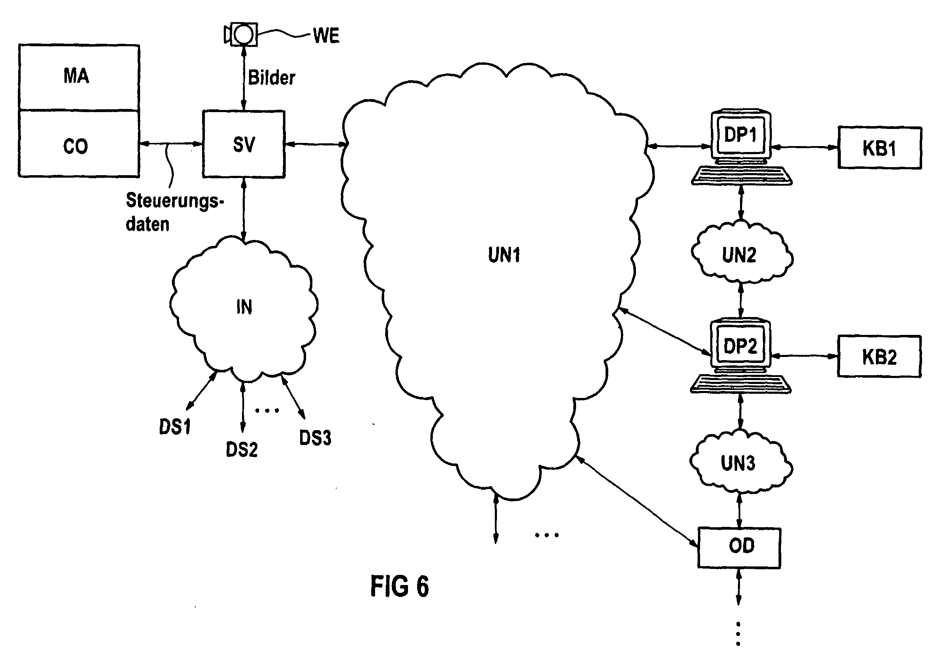

Eine vierte Ausführungsform der vorliegenden Erfindung ist in Fig. 6 dargestellt. Die tatsächlichen Zustände der zu steuernden Maschine MA werden durch eine WebCam WE beobachtet. Die WebCam WE liefert die Bilder an den UMTS-Server SV, der wiederum Steuerungsdaten mit der Steuerungseinheit CO der Maschine MA kommuniziert.

Der UMTS-Server SV ist an das Internet oder ein Intranet IN angeschlossen. Dieses wiederum kann mit mehreren Datenservern DS 1, DS 2, DS 3, z. B. für ein sogenanntes Manufacturing Execution System (MES), Dokumentationen etc. verbunden sein.

Der UMTS-Server SV besitzt außerdem eine Verbindung zu einem UMTS-Netz UN 1. Dieses UMTS-Netz UN 1 ist mit mehreren Datenverarbeitungsanlagen DP 1, DP 2 verschiedener Serviceprovider und beispielsweise einer Betriebsdatenerfassung OD verbunden. Die Datenverarbeitungsanlagen DP 1, DP 2 der Serviceprovider sind jeweils mit eigenen sogenannten Knowledge-Bases KB 1, KB 2 verbunden. Außerdem sind sie untereinander und mit der Betriebsdatenerfassung OD durch UMTS-Netze UM 2, UM 3 verbunden.

Die bei dieser vierten Ausführungsform verwendeten Datennetze IN, UN 1, UN 2, UN 3 können beliebig durch andere geeignete Netze ersetzt und miteinander kombiniert werden.

Bei dem in Figur 6 gezeigten Szenario sind somit über ein UMTS-Netz UN 1 unterschiedliche Serviceeinrichtungen, z. B. von einem Steuerungshersteller, einem Maschinenbauer, einer Betriebsdatenerfassung etc, mit dem UMTS-Server SV einer Maschinensteuerung CO verbunden. Die einzelnen Serviceeinrichtungen können dabei auch wieder über die UMTS-Netze UN 2, UN 3 oder andere Kommunikationsmedien Konferenzschaltungen mit dem UMTS-Server SV oder dem nicht dargestellten Bediener US herstellen.

Mit dem erfindungsgemäßen System lassen sich damit die folgenden Funktionen in vorteilhafter Weise realisieren:
- Tracefunktionalität über UMTS-Onlinetrace mit Remote-Bedienung (Onlinetrace mit Remote-Datenablage)
- Übertragung von bewegten und/oder unbewegten Maschinenbildern
- Übertragung von Echtzeitdaten einer Steuerung/Maschine mit Remote-Auswertung (Qualitätsdaten, Produktionsdaten, Servicedaten, ...)
- Darstellung eines realen Fertigungsprozesses über eine Kamera
- Visualisierung dynamischer und statischer Maschinen- und Steuerungsgrößen
- Übertragung von Bildinformationen.

Damit lässt sich erfindungsgemäß für industrielle Maschinen eine Remote-Diagnose, ein Remote-Service bzw. eine Remote-Bediener-Führung realisieren, wobei der Remote-Service-Mann Zugriff auf folgende Daten hat:
- Steuerungsdaten
- Bewegte Bilder (reales Bild der Maschine z. B. über WebCam)
- Optional Zugriff auf weitere Datenserver z. B. Dokumentationen, MES, etc. (z. B. welches Material wird gerade verarbeitet, welcher Auftrag etc.)

Ferner kann der Bediener vor Ort geführt werden durch:
- Übertragen von Hinweisen (z. B. spezielle Dokumente) auf VorOrt-Visualisierungsgeräte (z. B. OP, Handheld, Handy)
- Einblenden der Bedienung in die "Augmented Reality Brille"

Ebenso lässt sich, wie bereits erwähnt, eine Konferenzschaltung unter Einbeziehung verschiedener Servicedienststellen, z. B. OEM- und Steuerungshersteller, beispielsweise für Serviceeinsätze oder Inbetriebnahme-/Optimierungsvorgänge herstellen.

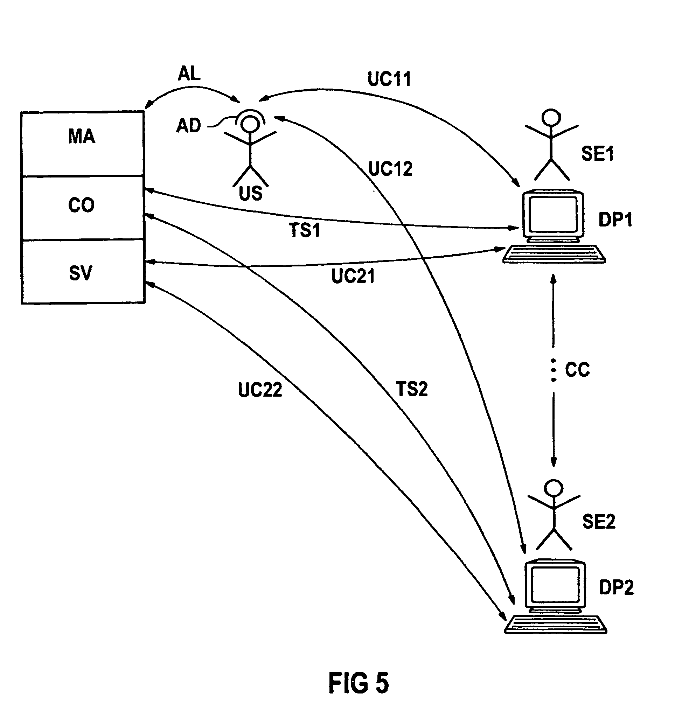

Zur kompakten Bauweise kann, wie in den Figuren 3, 4 und 5 dargestellt ist, der UMTS-Server SV in die Maschine MA bzw. die Steuerung CO integriert werden.

## Patentansprüche

1. Steuerungsvorrichtung zur Steuerung oder Regelung sowie zur Überwachung einer automatisierten Maschine (MA) mit
einer Verarbeitungseinrichtung (SV) zum Verarbeiten und unmittelbaren Kommunizieren von Daten betreffend die automatisierte Maschine (MA) von/mit einer davon entfernt angeordneten Datenverarbeitungsvorrichtung (DP), wobei
durch die Verarbeitungseinrichtung (SV) die die automatisierte Maschine betreffenden Daten in Form von Multimedia-Nachrichten verarbeitbar und an die entfernte Datenverarbeitungsvorrichtung (DP) übertragbar sind, so dass Daten für die Steuerung oder Regelung der automatisierten Maschine in der entfernten Datenverarbeitungsvorrichtung (DP) erstellbar und Überwachungs - sowie Diagnosedaten bezüglich der automatisierten Maschine (MA) in der entfernten Datenverarbeitungsvorrichtung auswertbar sind,
**dadurch gekennzeichnet, dass**
die Multimedia-Nachrichten dem UMTS-Standard entsprechen und
eine Augmented-Reality-Einrichtung (AD) für einen Bediener (US) der Maschine (MA) über eine Telekommunikationseinrichtung (UC1) mit der Datenverarbeitungsvorrichtung (DP) und über eine Augmented-Reality-Schleife (AL) mit der Maschine (MA) bzw. deren Steuerung (DO) verbunden ist.

2. Steuerungsvorrichtung nach Anspruch 1, wobei die Telekommunikationseinrichtung (UC 1, UC 2, TS) zur Datenkommunikation zwischen der Steuerungsvorrichtung (CO) und der Datenverarbeitungsvorrichtung (DP) ausgelegt ist, und wobei die Steuerungsvorrichtung und die Datenverarbeitungsvorrichtung über eine Visualisiereinrichtung verfügen, so dass ein einseitiges oder wechselseitiges Visualisieren von Informationen über die Telekommunikationseinrichtung durchführbar ist.

3. Steuerungsvorrichtung nach Anspruch 2, wobei die Kommunikationsverbindung der Telekommunikationseinrichtung (UC 1, UC 2, TS) bidirektional ist, so dass ein Abruf von Parametern und/oder Istzuständen der Steuervorrichtung (CO) und/oder der zu steuernden Maschine (MA), eine Tracefunktionalität und ein Onlinetrace mit Fernbedienung realisierbar ist.

4. Steuerungsvorrichtung nach Anspruch 2 oder 3, wobei die Datenverarbeitungsvorrichtung (DP) mehrere Datenverarbeitungseinheiten (DP 1, DP 2) umfasst, welche miteinander in Kommunikationsverbindung stehen und welche jeweils eine Telekommunikationsverbindung zur Echtzeitübertragung von Multimedia-Nachrichten zu der Steuervorrichtung (CO) aufweisen.

5. Steuerungsvorrichtung nach einem der Ansprüche 2 bis 4, wobei die Kommunikation zwischen den jeweiligen Komponenten über ein oder mehrere UMTS-Netze (UN 1, UN 2, UN 3) und das Internet (IN) durchführbar ist.

6. Verfahren zur Steuerung oder Regelung sowie zur Überwachung einer automatisierten Maschine (MA) durch
Bereitstellen einer Steuerungsvorrichtung (CO) und einer davon entfernt angeordneten Datenverarbeitungsvorrichtung (DP), die miteinander durch eine Telekommunikationseinrichtung (UC 1, UC 2, TS) unmittelbar verbunden sind, und
Übertragen von Steuerungs- und Überwachungsdaten betreffend die automatisierte Maschine (MA) in Form von Multimedia-Nachrichten über die Telekommunikationseinrichtung (UC 1, UC 2, TS) zwischen der Steuerungsvorrichtung (CO) und der entfernt angeordneten Datenverarbeitungsvorrichtung (DP) in Echtzeit, so dass Daten für die Steuerung oder Regelung der automatisierten Maschine in der entfernten Datenverarbeitungsvorrichtung (DP) erstellbar und Überwachungs- sowie Diagnosedaten bezüglich der automatisierten Maschine (MA) in der entfernten Datenverarbeitungsvorrichtung auswertbar sind,
**dadurch gekennzeichnet, dass**
die Multimedia-Nachrichten dem UMTS-Standard entsprechen und
die Steuerungs- und Überwachungsdaten mit der Telekommunikationseinrichtung (UC1, UC2, TS) an eine Augmented-Reality-Einrichtung (AD) übertragen und dort für einen Bediener (US) der Maschine (MA) visualisiert werden, wobei die Augmented-Reality-Einrichtung (AD) über eine Augmented-Reality-Schleife (AL) mit der Maschine (MA) bzw. deren Steuerung (DO) verbunden ist.

7. Verfahren nach Anspruch 6, wobei die Steuerungs- und Überwachungsdaten zwischen der Steuerungsvorrichtung (CO) und der Datenverarbeitungsvorrichtung (DP) übertragen und jeweils beim Empfänger visualisiert werden.

8. Verfahren nach Anspruch 6 oder 7, wobei Parameter und/oder Istzustände der Steuervorrichtung (CO) und/oder der zu steuernden Maschine (MA) über die Telekommunikationseinrichtung (UC 1, UC 2, TS) abgerufen und ein Onlinetrace mit Fernbedienung durchgeführt werden.

9. Verfahren nach einem der Ansprüche 6 bis 8, wobei multimediale Daten von verschieden lokalisierten Datenverarbeitungseinheiten (DP 1, DP 2) untereinander sowie von und zu der Steuerungsvorrichtung (CO) in Echtzeit übertragen werden.

10. Verfahren nach einem der Ansprüche 6 bis 9, wobei die jeweiligen Komponenten über ein oder mehrere UMTS-Netze (UN 1, UN 2, UN 3) und das Internet (IN) kommunizieren.

## Claims

1. Control device for controlling or regulating and monitoring an automated machine (MA), with
a processing device (SV) for processing and directly communicating data relating to the automated machine (MA) by/with a remote data processing device (DP), whereby
by means of the processing device (SV) the data in the form of multimedia messages relating to the automated machine can be processed and transmitted to the remote data processing device (DP), so that data can be formulated for the control or regulation of the automated machine in the remote data processing device (DP), and monitoring and diagnosis data relating to the automated machine (MA) can be evaluated in the remote data processing device,
**characterised in that**
multimedia messages correspond to the UMTS standard, and
an augmented reality device (AD) for a user (US) of the machine (MA) is connected to the data processing device (DP) via a telecommunications device (UC1) and to the machine (MA) and/or its control (DO) via an augmented reality loop (AL).

2. Control device according to Claim 1, the telecommunication device (UC 1, UC 2, TS) for data communication being positioned between the control device (CO) and the data processing device (DP), and the control device and the data processing device having a visualisation device, so that a unilateral or alternating visualisation of information can be carried out via the telecommunications device.

3. Control device according to Claim 2, the communication connection of the telecommunication device (UC 1, UC 2, TS) being bidirectional, so that a call-up of parameters and/or actual statuses of the control device (CO) and/or the machine to be controlled (MA), a trace functionality and an online trace can be realised using remote control.

4. Control device according to Claim 2 or 3, the data processing device (DP) having several data processing units (DP1, DP2) which are connected to each other in the communication connection and each have a telecommunication connection for real-time transmission of multimedia messages to the control device (CO).

5. Control device according to one of the Claims 2 to 4, the communication between the relevant components being implementable via one or more UMTS networks (UN 1, UN 2, UN 3) and the internet (IN).

6. Method for controlling or regulating and or monitoring an automated machine (MA), by
providing a control device (CO) and a remote data processing device (DP), which are directly connected to one another via a telecommunications device (UC 1, UC 2, TS), and
transmitting control and monitoring data relating to the automated machine (MA) in the form of multimedia messages between the control device (CO) and the remote data processing device (DP) in real-time via the telecommunication device (UC 1, UC 2, TS), so that data for the control or regulation of the automated machine can be formulated in the remote data processing device (DP) and monitoring data and diagnosis data relating to the automated machine (MA) can be evaluated in the remote data processing device,
**characterised in that**
the multimedia messages correspond to the UMTS standard, and
transmit the control and monitoring data using the telecommunication device (UC1, UC2, TS) to an augmented reality device (AD), the machine (MA) being evaluated there for a user (US), the augmented reality device (AD) being linked to the machine (MA) and/or its control (DO) via an augmented reality loop (AL).

7. Method according to Claim 6, the control and transmission data being transmitted between the control device (CO) and the data processing device (DP) and visualised in each instance at the receiver.

8. Method according to Claim 6 or 7, whereby parameters and/or actual statuses of the control device (CO) and/or the machine (MA) to be controlled are called up via the telecommunication device (UC 1, UC 2, TS) and an online trace using remote control is carried out.

9. Method according to one of the Claims 6 to 8, in that multimedia data from various localised data processing units (DP 1, DP 2) is transmitted in real-time among one another both from and to the control device (CO).

10. Method according to one of the Claims 6 to 9, whereby the relevant components communicate via one or several UMTS networks (UN 1, UN 2, UN 3) and the internet (IN).

## Revendications

1. Dispositif de commande pour la commande ou la régulation ainsi que pour la surveillance d'une machine automatisée (MA)
avec un dispositif de traitement (SV) pour le traitement et la communication immédiate de données concernant la machine automatisée (MA) par / avec un dispositif de traitement de données distant (DP),
les données concernant la machine automatisée pouvant être traitées sous forme de messages multimédia par le dispositif de traitement (SV) et pouvant être transmises au dispositif de traitement de données distant (DP) de telle sorte que des données peuvent être élaborées pour la commande ou la régulation de la machine automatisée dans le dispositif de traitement de données distant (DP) et que des données de surveillance et de diagnostic concernant la machine automatisée (MA) peuvent être évaluées dans le dispositif de traitement de données distant,
**caractérisé par le fait que**
les messages multimédia correspondent au standard UMTS, et
un dispositif à réalité amplifiée (AD) destiné à un opérateur (US) chargé de la machine (MA) étant relié au dispositif de traitement de données (DP) par l'intermédiaire d'un dispositif de télécommunication (UC 1) et à la machine (MA) ou à sa commande (DO) par l'intermédiaire d'une boucle à réalité amplifiée (AL).

2. Dispositif de commande selon la revendication 1, dans lequel le dispositif de télécommunication (UC 1, UC 2, TS) est conçu pour la communication de données entre le dispositif de commande (CO) et le dispositif de traitement de données (DP) et dans lequel le dispositif de commande et le dispositif de traitement de données disposent d'un dispositif de visualisation de telle sorte qu'une visualisation unilatérale ou bilatérale d'informations peut être effectuée par l'intermédiaire du dispositif de télécommunication.

3. Dispositif de commande selon la revendication 2, dans lequel la liaison de communication du dispositif de télécommunication (UC 1, UC 2, TS) est bidirectionnelle de telle sorte qu'une interrogation de paramètres et/ou d'états réels du dispositif de commande (CO) et/ou de la machine (MA) à commander, une fonctionnalité de traçage et une fonctionnalité Onlinetrace avec commande à distance peuvent être réalisées.

4. Dispositif de commande selon la revendication 2 ou 3, dans lequel le dispositif de traitement de données (DP) comprend plusieurs unités de traitement de données (DP 1, DP 2) qui sont en liaison de communication entre elles et qui comportent chacune une liaison de télécommunication pour la transmission en temps réel de messages multimédia vers le dispositif de commande (CO).

5. Dispositif de commande selon l'une des revendications 2 à 4, dans lequel la communication entre les composants respectifs peut être mise en oeuvre par l'intermédiaire d'un ou plusieurs réseaux UMTS (UN 1, UN 2, UN 3) et d'Internet (IN).

6. Procédé de commande pour la commande ou la régulation ainsi que pour la surveillance d'une machine automatisée (MA)
par la mise à disposition d'un dispositif de commande (CO) et d'un dispositif de traitement de données distant (DP) qui sont reliés directement entre eux par un dispositif de télécommunication (UC 1, UC 2, TS), et
par la transmission de données de commande et de surveillance concernant la machine automatisée (MA) sous la forme de messages multimédia par l'intermédiaire du dispositif de télécommunication (UC 1, UC 2, TS) entre le dispositif de commande (CO) et le dispositif de traitement de données distant (DP) en temps réel de telle sorte que des données peuvent être élaborées pour la commande ou la régulation de la machine automatisée dans le dispositif de traitement de données distant (DP) et que des données de surveillance et de diagnostic concernant la machine automatisée (MA) peuvent être évaluées dans le dispositif de traitement de données distant,
**caractérisé par le fait que**
les messages multimédia correspondent au standard UMTS, et
les données de commande et de surveillance sont transmises avec le dispositif de télécommunication (UC 1, UC 2, TS) à un dispositif à réalité amplifiée (AD) où elles sont visualisées par un opérateur (US) chargé de la machine (MA), le dispositif à réalité amplifiée (AD) étant relié par l'intermédiaire d'une boucle à réalité amplifiée (AL) à la machine (MA) ou à sa commande (CO).

7. Procédé selon la revendication 6, dans lequel les données de commande et de surveillance sont transmises entre le dispositif de commande (CO) et le dispositif de traitement de données (DP) et sont visualisées à chaque fois chez le récepteur.

8. Procédé selon la revendication 6 ou 7, dans lequel des paramètres et/ou des états réels du dispositif de commande (CO) et/ou de la machine (MA) à commander sont interrogés par l'intermédiaire du dispositif de télécommunication (UC 1, UC 2, TS) et un traçage en direct Onlinetrace avec commande à distance est mis en oeuvre.

9. Procédé selon l'une des revendications 6 à 8, dans lequel des données multimédia sont transmises en temps réel par différentes unités de traitement de données localisées (DP 1, DP 2) entre elles ainsi que de et vers le dispositif de commande (CO).

10. Procédé selon l'une des revendications 6 à 9, dans lequel les composants respectifs communiquent par l'intermédiaire d'un ou plusieurs réseaux UMTS (UN 1, UN 2, UN 3) et d'Internet (IN).
